# EUROPÄISCHE PATENTANMELDUNG

(11) **EP 3 056 331 A1**
(43) Veröffentlichungstag der Anmeldung: **17.08.2016**
(21) Anmeldenummer: 15000460.4
(22) Anmeldetag: 16.02.2015
(51) Int. Cl.: B29C 65/00, A44C 17/02, A44C 17/04, B29C 70/72, B29C 37/00, B29C 59/02, B44C 1/24, B44C 5/04, B29C 70/64, B29C 33/40, B29C 33/42, B44B 5/02, B29L 31/00

(54) **Verbundkörper mit Dekorkörper**

(71) Anmelder: Swarovski Aktiengesellschaft, 9495 Triesen (LI)
(72) Erfinder: Pauli, Uwe, 9475 Sevelen (CH); Wand, Thomas, 9494 Schaan (LI)
(74) Vertreter: Torggler & Hofinger Patentanwälte

(57) **Zusammenfassung**

Verfahren zur Herstellung eines Verbundkörpers (1) umfassend einen Trägerkörper (2) und wenigstens einen Dekorkörper (3), vorzugsweise einen Schmuckstein (3a, 3b), wobei der Trägerkörper (2) thermoplastisches Material umfasst, wobei das Verfahren die Schritte umfasst:
• Anordnen des Dekorkörpers (3) auf dem Trägerkörper (2)
• Erwärmen des Trägerkörpers (2)
• Eindrücken des Dekorkörpers (3) in den Trägerkörper (2) mit einem Stempel (4) aus elastisch verformbarem Material.

## Beschreibung

Die Erfindung betrifft ein Verfahren zur Herstellung eines Verbundkörpers umfassend einen Trägerkörper und wenigstens einen Dekorkörper, vorzugsweise einen Schmuckstein, wobei der Trägerkörper thermoplastisches Material umfasst.

Kunststoffe, insbesondere solche aus thermoplastischem Material, sind aufgrund ihrer Formbarkeit sowie ihrer Materialeigenschaften in verschiedensten Bereichen des täglichen Lebens einsetzbar. Als nachteilig wird bei Kunststoffen jedoch häufig deren Oberflächenbeschaffenheit empfunden, sodass vielfach der Wunsch besteht, die Oberfläche von Gegenständen aus Kunststoff mit Dekorkörpern, beispielsweise mit Schmucksteinen, zu verzieren. Da die Dekorkörper, wie beispielsweise im Falle von Schmucksteinen aus Glas, gänzlich andere Materialeigenschaften wie der Kunststoff aufweisen, kann sich die Befestigung der Dekorkörper als ungünstig herausstellen, zumal das manuelle Ankleben einzelner Dekorkörper einerseits zeitlich extrem aufwändig ist und andererseits häufig nur einen unzureichenden mechanischen Halt der Dekorkörper gewährleistet.

Zu diesem Zweck sind im Stand der Technik bereits einige Verfahren bekannt geworden, die einen verbesserten mechanischen Halt, sowie eine kostengünstige und automatisierbare Fertigung ermöglichen. Das europäische Patent EP 2 432 632 betrifft ein Verfahren zur Herstellung eines mit Schmucksteinen versehenen Artikels unter Verwendung einer Spritzgießmaschine, bei dem die Schmucksteine von einer Haltevorrichtung umfassend eine Trägerfolie gehalten werden und mit Kunststoffschmelze hinterspritzt werden. Nachteilig hierbei ist, dass die Haltevorrichtung an die zu applizierenden Schmucksteine angepasst sein muss. Zudem bedarf es für das Hinterspritzen mit Kunststoffschmelze einer Spritzgießmaschine, sodass dieses Verfahren nur im großindustriellen Einsatz anwendbar ist.

Die DE 2 452 250 beschreibt ein Verfahren zur Befestigung von Schmucksteinen auf einem Träger, wobei man die Schmucksteine mit beschichteten Setzflächen in entsprechende Vertiefungen des Trägers anordnet, zusammen mit dem Träger in einem Temperofen bei Schmelztemperatur der Folie an den Träger anschmilzt und anschließend abkühlt. Gemäß diesem Verfahren müssen also alle Schmucksteine vor dem Befestigen am Träger mit einer Klebeschicht versehen werden. Dies ist ein aufwändiger Schritt, der nicht in Einklang mit einer kostengünstigen und automatisierten Fertigung zu bringen ist.

Aus der EP 2 189 078 ist ein Verfahren zum Setzen von Schmucksteinen bekannt, in dem in den Trägerkörper aus Kunststoff Vertiefungen gebohrt werden, die in etwa den Abmessungen des Schmucksteins entsprechen müssen. Anschließend wird der Trägerkörper im Bereich der Kavitäten erhitzt, die Schmucksteine in den Kavitäten platziert und in die Kavitäten derart eingepresst, dass eine plastische Verformung des Trägers um die Schmucksteine entsteht. Mit diesem Verfahren wird zwar gewährleistet, dass die Schmucksteine mechanisch sicher im Trägerkörper befestigt sind. Allerdings ist dieses Verfahren umständlich, zeitaufwändig und damit auch kostenintensiv. Darüber hinaus muss der Trägerkörper zumindest eine gewisse Dicke aufweisen, um die Anbringung von Kavitäten zu ermöglichen.

Aufgabe der vorliegenden Erfindung ist es, ein Verfahren anzubieten, das die obigen Nachteile vermeidet und eine einfache und flexible Möglichkeit bietet, einen Verbundkörper aus einem Trägerkörper, der zumindest teilweise aus thermoplastischem Material besteht, und einem Dekorkörper herzustellen.

Gelöst wird diese Aufgabe durch ein Verfahren mit den Merkmalen des Anspruchs 1. Bevorzugte Ausführungsformen der Erfindung sind in den abhängigen Ansprüchen definiert.

In einem ersten Verfahrensschritt wird der wenigstens eine Dekorkörper auf dem Trägerkörper angeordnet, wobei der Dekorkörper sowohl manuell als auch automatisch, beispielsweise mittels einer Transferfolie, auf dem Trägerkörper angeordnet wird. Eine solche Transferfolie bietet sich insbesondere dann an, wenn eine Mehrzahl von Dekorkörpern gleichzeitig auf dem Trägerkörper angeordnet werden soll. Bei Verwendung einer Transferfolie kann es sinnvoll sein, den oder die Dekorkörper auf dem Trägerkörper vorzufixieren, um die Transferfolie von den Dekorkörpern abziehen zu können.

In einem weiteren Verfahrensschritt wird der Trägerkörper erwärmt, beispielsweise durch Anordnen des Trägerkörpers mit dem darauf angeordnetem Dekorkörper auf einer Heizplatte. Thermoplaste sind Kunststoffe, die sich in einem bestimmten Temperaturbereich reversibel verformen lassen. In Folge der Erwärmung können die thermoplastischen Bereiche des Trägerkörpers einen pastösen bis hin zu einem schmelzflüssigem Zustand erreichen, wodurch sich das thermoplastische Material im Bereich des angeordneten Dekorkörpers bei Druckausübung auf den Dekorkörper räumlich anders anordnen kann.

In einem weiteren Verfahrensschritt wird der Dekorkörper in den Trägerkörper mit einem Stempel aus einem elastisch verformbaren Material eingedrückt. Die Erwärmung des Trägerkörpers kann dabei vor oder erst nachdem der Stempel mit Druck beaufschlagt worden ist erfolgen. Durch den Stempel aus elastisch verformbarem Material können Dekorkörper unterschiedlichster Form und Größe sowie bei mehreren Dekorkörpern mit unterschiedlichstem Abstand zueinander auf dem Trägerkörper befestigt werden, sodass eine spezielle Adaptierung des Stempels für verschiedenartige Dekorkörper nicht notwendig ist. Insbesondere können bei der Befestigung mehrerer Dekorkörper am Trägerkörper gleichzeitig verschiedenartige Dekorkörper, insbesondere mit unterschiedlichen Größen, Formen und Materialien, mit dem elastischen Stempel eingedrückt werden, wobei zudem unterschiedlich große Abstände zwischen den Dekorkörpern realisierbar sind. Dabei sind die Größe, Form und Verteilung der Dekorkörper auf dem Trägerkörper weitestgehend beliebig, solange sie mit gleichmäßigem Druck des Stempels beaufschlagt werden können.

In Abhängigkeit von der Elastizität des Stempels wird der Dekorkörper beim Eindrücken vom Stempel unterschiedlich stark umschlossen, wobei je nach Wahl der Härte des Stempels, sowie in Abhängigkeit von der Form und Größe des Dekorkörpers, an dessen Umfangsrand kleine Hohlräume gebildet werden können, in die das pastöse oder schmelzflüssige thermoplastische Material des Trägerkörpers aufsteigen kann, sodass sich nach Abkühlen und Erstarren des Trägerkörpers eine krampenähnliche, formschlüssige Fassung des Dekorkörpers ausprägen kann. Die Größe dieser Fassung kann durch entsprechende Wahl der Temperatur, auf die der Trägerkörper erwärmt wird, des Drucks und der Einwirkdauer des Drucks auf den Stempel und der Härte des Stempels bestimmt werden. Neben der adhäsiven Verbindung ergibt eine solche formschlüssige Verbindung einen besonders sicheren Halt für den Dekorkörper.

In weiterer Folge wird der Trägerkörper mit dem eingedrückten Dekorkörper abgekühlt. Dies kann beispielsweise durch Entfernen oder Abschalten der Heizplatte oder auch durch Ersetzen der Heizplatte mit einer Kälteplatte erfolgen. Die Verfahrensdauer kann dabei von der Geschwindigkeit der Erwärmungsrate und der Abkühlungsrate, sowie der Höhe der Temperatur, auf die der Trägerkörper erwärmt wird gesteuert werden.

Der Dekorkörper ist beispielsweise ausgewählt unter einem vorzugsweise mit Facetten versehenen Schmuckstein, welcher ein natürlicher oder synthetischer Edelstein oder ein Schmuckstein aus keramischem Material oder ein Glasstein, vorzugsweise aus Kristallglas, sein kann, einem metallischen Dekorobjekt, einem Holzelement und dergleichen.

Der Trägerkörper besteht zumindest bereichsweise, in einer Ausführungsform auch zur Gänze, aus einem thermoplastischen Kunststoff. Als Thermoplaste kommen u.a. Ethyl-Vinyl-Acetate, Polymethyl-Acrylate (PMMA), Polycarbonate (PT), Polyethylene (PE), Polypropylene (PP), Polystyrole (PS), Acrylnitril-Butadien-Styrole (ABS) und dergleichen mehr in Frage.

In einer bevorzugten Ausführungsform umfasst der Trägerkörper eine einlagige oder eine mehrlagige thermoplastische Folie oder besteht der Trägerkörper aus einer einlagigen oder mehrlagigen thermoplastischen Folie. Derartige Folien haben den Vorteil, dass sie leicht auf eine bestimmte Größe zuschneidbar sind. Ein Verbundkörper bestehend aus einer thermoplastischen Folie mit daran befestigten Dekorkörpern kann dann einerseits in besonders einfacher Weise zur Dekoration anderer Gegenstände verwendet werden, wozu die Elastizität und Flexibilität einer solchen Folie entscheidend beitragen.

Dabei kann der Trägerkörper eine für Licht des sichtbaren Spektrums im Wesentlichen transparente Folie umfassen. Beispielsweise ist die thermoplastische Folie, auf die der Dekorkörper angeordnet wird, für Licht des sichtbaren Spektrums transparent ausgebildet. Dies hat den Vorteil, dass die durch Eindrücken des Stempels erzeugte formschlüssige Fassung optisch in den Hintergrund tritt und das Erscheinungsbild des Verbundkörpers möglichst wenig stört. Bei mehrlagigen Folien oder bei einer Mehrzahl von Folien kann z.B. die an der Oberseite angeordnete Lage oder die an der Oberseite angeordnete Folie, an der der Dekorkörper angeordnet wird, im Wesentlichen transparent sein, während eine darunterliegende Lage im Wesentlichen schwarz ist. Je nach gewünschtem Erscheinungsbild kann der Trägerkörper im Allgemeinen und die ein- oder mehrlagigen Folien im Speziellen aber in verschiedensten Farben und mit unterschiedlichster optischer Durchlässigkeit ausgebildet sein.

In einer bevorzugten Ausführungsform ist das Material des Stempels aus der Gruppe der Elastomere ausgewählt, wobei Stempel aus Silikon besonders geeignet sind. Die Shore-Härte des Stempels kann dabei in Abhängigkeit vom Material und von der Größe der anzuordnenden Dekorkörper abhängig gemacht werden. Stempel aus Elastomere und insbesondere aus Silikon sind aufgrund ihrer Duktilität besonders für das erfindungsgemäße Verfahren geeignet. Wird der auf dem Trägerkörper angeordnete Dekorkörper durch den Stempel in den Trägerkörper eingedrückt, verformt sich der Stempel um den Dekorkörper und übt dadurch gleichmäßig Druck auf den Dekorkörper aus, sodass sich eine gleichmäßige formschlüssige Verbindung zwischen Trägerkörper und Dekorkörper ergeben kann. Wird der Stempel vom Verbundkörper entfernt, so formt er sich aufgrund der Elastizität wieder zurück und kann für das Verfahren erneut verwendet werden. Ein weiterer Vorteil von Silikon als Material für den Stempel sind die hervorragenden Trenneigenschaften von Silikon, sodass der Stempel nach dem Eindrücken des Dekorkörpers in den Trägerkörper in einfacher Weise entfernt werden kann, ohne Gefahr, den eingedrückten Dekorkörper wieder aus dem Trägerkörper herauszureißen.

In einer weiteren Ausführungsform des erfindungsgemäßen Verfahrens ist die Oberfläche des Stempels mit einer Struktur versehen, die durch das Eindrücken in das thermoplastische Material des Trägerkörpers eingeprägt wird. Beim Eindrücken des Dekorkörpers in den schmelzflüssigen bzw. pastösen Trägerkörper wird der Stempel aufgrund seiner Duktilität in den Bereichen außerhalb des Dekorkörpers direkt auf den Trägerkörper gepresst. Dadurch wird in diesen Bereichen diese Struktur in den Trägerkörper eingeprägt, sodass sich nach Abkühlung des Trägerkörpers ein negatives Abbild der Struktur des Stempels im Verbundkörper ergibt. Neben der Anordnung der Dekorkörper ist dies ein weiterer Schritt zur Verbesserung des optischen Aussehens eines Verbundkörpers, wobei besonders vorteilhaft ist, dass die Befestigung des Dekorkörpers, d.h. dessen Einkleben bzw. Einfassen am Trägerkörper sowie die Einprägung der Oberflächenstruktur des Stempels in einem einzigen Prozessschritt erfolgen kann. Dabei sind an die Art und Gestaltung der Struktur, die in den Trägerkörper eingeprägt wird, beinahe keine Grenzen gesetzt, sodass sich einzigartige Möglichkeiten für die Gestaltung eines Verbundkörpers mit einem Trägerkörper und einem daran bzw. darin angeordneten Dekorkörper ergeben, zumal Art und Anzahl der Dekorkörper sowie das Setzbild der Dekorkörper und das Erscheinungsbild der Oberfläche des Trägerkörpers zwischen dem oder den Dekorkörper(n) aufgrund der Vielzahl an einstellbaren Verfahrensparameter beliebig aufeinander abgestimmt werden können, sodass eine komplex wirkende, umfassende optische Gestaltung auf mehreren Ebenen ermöglicht wird. Die unterschiedlichen eingeprägten Oberflächenstrukturen dienen als integrierter Bestandteil der Gestaltung des erfindungsgemäßen Verbundkörpers.

Beispielsweise kann die Oberfläche des Stempels bei dessen Herstellung mit einer Struktur versehen sein, die der Oberfläche eines textilen Flächengebildes oder der Oberfläche verschiedener Lederarten ähnelt. Darüber hinaus können unterschiedlichste geometrische Muster in die Oberfläche des Stempels eingeprägt werden, die bei der Durchführung des erfindungsgemäßen Verfahrens wiederum als negatives Abbild in die Oberfläche des Trägerkörpers eingeprägt werden. Zudem können auch Abbildungen, wie z.B. Firmenlogos, die als negativ abgebildete reliefartige Struktur in der Oberfläche des Stempels dargestellt sind, auf den Trägerkörper als positives Abbild übertragen werden.

In einer Ausführungsform des Verfahrens wird der Dekorkörper mit einer Transferfolie auf dem Trägerkörper angeordnet. Die Transferfolie wird dann vor dem Eindrückvorgang mit dem Stempel vom Dekorkörper entfernt. Zu diesem Zweck kann es notwendig sein, den Dekorkörper auf dem Trägerkörper vorzufixieren. Für dieses Vorfixieren kann der Trägerkörper ebenfalls erwärmt werden, damit dessen thermoplastische Bereiche pastös oder schmelzflüssig werden. Der Dekorkörper wird dabei in den Trägerkörper leicht eingedrückt, wobei der auf den Dekorkörper einwirkende Druck in der Regel geringer ist, als der Druck mit dem der elastisch verformbare Stempel zum Eindrücken und Befestigen des Dekorkörpers beaufschlagt wird.

In einer Ausführungsform der Erfindung erfolgt die Vorfixierung des Dekorkörpers auf dem Trägerkörper durch Andrücken eines Stempels aus elastisch verformbarem Material, wobei ebenfalls Elastomere und insbesondere Silikon als Stempelmaterial in Frage kommen. Der für die Vorfixierung des Dekorkörpers verwendete Stempel kann aber eine andere Shore-Härte als der für das Eindrücken und Befestigen des Dekorkörpers verwendete Stempel aufweisen. Es kann aber auch vorgesehen sein, nur eine Art von Stempel sowohl für die Vorfixierung des Dekorkörpers, als auch für das Eindrücken und Befestigen des Dekorkörpers im Trägerkörpers zu verwenden. Aufgrund der Vorfixierung kann die Transferfolie dann abgezogen werden, ohne Gefahr den Dekorkörper vom Trägerkörper ungewünscht zu entfernen.

In einer Ausführungsform der Erfindung weist jener Bereich des Trägerkörpers, in dem der Dekorkörper angeordnet wird, einen niedrigeren Schmelzpunkt auf als davon entfernte Bereiche. Umfasst der Trägerkörper beispielsweise eine mehrlagige thermoplastische Folie oder besteht aus mehreren Folien, kann es vorgesehen sein, dass jene Lage der thermoplastischen Folie bzw. jene der Folien, an der der Dekorkörper angeordnet wird, einen niedrigeren Schmelzpunkt als die davon entfernte Lage bzw. Folie aufweist. Dadurch werden beim Erwärmen des Trägerkörpers nur die äußeren Bereiche der thermoplastischen Folie bzw. nur die äußere Folie schmelzflüssig bzw. pastös, während die inneren Bereiche bzw. die innere(n) Folie(n) nur wenig beeinflusst wird oder werden. Dies hat den Vorteil, dass ein Durchdrücken des Dekorkörpers durch den gesamten Trägerkörper vermieden werden kann, weil jene Bereiche des Trägerkörpers mit einem höheren Schmelzpunkt während des Erwärmens nicht schmelzflüssig bzw. pastös sind.

Die Erfindung betrifft weiters ein Verfahren zur Dekorierung eines Gegenstands mit einem Verbundkörper, der nach einem wie oben beschriebenen Verfahren hergestellt worden ist, wobei der Trägerkörper mit der vom Dekorkörper entfernten Seite am Gegenstand befestigt wird. Insbesondere wenn der Trägerkörper flexibel ausgebildet ist, z.B. wenn dieser eine thermoplastische Folie umfasst oder aus einer thermoplastischen Folie besteht, kann der Verbundkörper auch auf kompliziert geformten dreidimensionalen Körpern befestigt werden.

Mit diesem Verfahren können somit Gegenstände durch Befestigung eines solchen Verbundkörpers veredelt und dekoriert werden. Besonders vorteilhaft kann dieses Verfahren angewendet werden, wenn der Trägerkörper aus einer oder mehreren thermoplastischen Folie(n) besteht. Die Flexibilität und Elastizität der Folie erlaubt es auch kompliziert geformte dreidimensionale Körper mit dem Verbundkörper zu überziehen, wobei durch den sicheren mechanischen Halt der Dekorkörper im Trägerkörper sicher fixiert ist. Je nach Art der thermoplastischen Folie ist eine Elastizität um bis zu 30 - 40 % in jede Zugrichtung möglich, (bei Raumtemperatur) ohne dass der Halt des Dekorkörpers gefährdet ist.

Der Verbundkörper kann dabei auf textilen Flächengebilden, auf Filz auf anderen Kunststoffgegenständen befestigt werden, wobei Kleben oder Verschweißen, Nähen und/oder Klammern möglich sind. Beispielsweise kann der Verbundkörper auf einem endlosen Haarband, Stirnband oder Armband zu deren Verzierung befestigt werden. Aufgrund der Dehnfähigkeit des Verbundkörpers in Umfangsrichtung kann mit diesem Verfahren ein mit einem Dekorkörper verziertes Haarband, Kopfband oder Armband geschafft werden, ohne dass dessen Gebrauchsfähigkeit eingeschränkt wird. Dabei können verschiedenartigste Gegenstände auch nachträglich mit diesem Verfahren veredelt werden. Als Anwendungsbeispiele sind Hüllen für Mobiltelefone oder Tablets und generell Gehäuse verschiedenster elektronischer Geräte, wie z. B. von Computermäusen oder Lautsprechern, aber auch Brillenetuis, Gehäuse und Taschen für Tablets oder Laptops und vieles mehr mit einem solchen Verbundkörper verzierbar.

Aufgrund des einfachen Herstellungsverfahrens kann eine Vielzahl von Dekorkörpern in einem individuell gewünschten Muster gesetzt werden und dann in einen erfindungsgemäßen Verbundkörper implementiert werden. Dieser Verbundkörper kann dann seinerseits zur Veredelung bzw. Dekorierung eines Gegenstands mit einem individuellen Muster herangezogen werden.

Die Erfindung betrifft weiters einen Verbundkörper, umfassend einen Trägerkörper und wenigstens einen Dekorkörper, vorzugsweise einen Schmuckstein, wobei der Trägerkörper thermoplastisches Material umfasst. Dabei kann der Verbundkörper nach einem wie oben beschriebenen Verfahren hergestellt worden sein. Der erfindungsgemäße Verbundkörper kennzeichnet sich dadurch, dass auf jener Seite des Trägerkörpers, auf der der Dekorkörper angeordnet ist, zumindest bereichsweise ein dekoratives Relief eingeprägt ist. Das Relief wird dabei von dem thermoplastischen Material des Trägerkörpers gebildet. Dadurch wird ein Verbundkörper geschaffen, der neben der Verzierung durch den wenigstens einen Dekorkörper weitere Designelemente in Form des dekorativen Reliefs aufweist. Der Trägerkörper selbst kann dabei eine ein- oder mehrlagige thermoplastische Folie umfassen oder aus einer solchen bestehen. Die reliefartige Struktur kann wie oben beschrieben in Form geometrischer Muster oder Abbildungen oder auch in Form unregelmäßiger Muster, wie z. B. der Oberfläche eines textilen Flächengebildes oder eines Leders nachempfunden, ausgebildet sein.

In einer bevorzugten Ausführungsform ist der Trägerkörper elastisch verformbar. Dabei kann im Falle eines flächigen Trägerkörpers bei Raumtemperatur eine elastische Verformbarkeit pro Zugrichtung von 30 bis 40 % realisierbar sein.

In einer Ausführungsform der Erfindung ist der Dekorkörper als chatonförmiger Schmuckstein ausgebildet, der mit der zu einer Spitze zusammenlaufenden Rückseite im Trägerkörper angeordnet ist, während die die Tafel aufweisende Vorderseite zur Gänze oder zumindest bereichsweise aus dem Trägerkörper hervorragt.

In einer bevorzugten Ausführungsform ist der Umfangsrand des Dekorkörpers vom thermoplastischen Material des Trägerkörpers zumindest bereichsweise, vorzugsweise ringförmig, eingefasst. Im Falle eines Schmucksteins kann diese ringförmige Einfassung als Wulst den größten Querschnittsbereich des Schmucksteins, beispielsweise die Rhondiste bei einem Schmuckstein in Form eines Chatons, klammerartig umgreifen, wodurch sich eine besonders stabile Befestigung des Schmucksteins am Trägerkörper ergibt.

Die Erfindung betrifft weiters einen Stempel aus elastisch verformbarem Material, vorzugsweise ausgewählt aus der Gruppe der Elastomere, zum Eindrücken eines Dekorkörpers in einen Trägerkörper gemäß einem wie oben beschriebenen Verfahren, wobei die Oberfläche des Stempels zumindest bereichsweise mit einer Struktur versehen ist.

Diese Struktur ist reliefartig an der Stempeloberfläche ausgebildet und kann beispielsweise ein geometrisches Muster, eine Abbildung, oder auch ein unregelmäßiges Muster, wie zum Beispiel der Oberfläche eines textilen Flächengebildes oder eines Leders nachempfunden, darstellen.

Ein zusätzlicher optischer Effekt kann darin bestehen, dass die Oberfläche des Trägerkörpers, auf der der Dekorkörper angeordnet wird, bedruckt ist, beispielsweise in Form einer bedruckten Folie. Da sich eine Synthese aus dreidimensionaler Anmutung durch die reliefartige Struktur, dem optischen Eindruck der bedruckten Oberfläche des Trägerkörpers und der unterstützenden Wirkung durch den Dekorkörper ergibt und damit eindrückliche einzigartige optische Effekte erzielt werden können.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1a bis 1d: schematische Darstellungen zur Anordnung von zwei verschieden ausgebildeten Dekorkörpern auf einem Trägerkörper,
- Fig. 2a bis 2c: schematische Darstellungen zum Verfahrensschritt des Eindrückens der Dekorkörper mit einem Stempel aus elastisch verformbarem Material,
- Fig. 3a bis 3d: schematische Darstellungen zur Anordnung von zwei verschieden ausgebildeten Dekorkörpern auf einem Trägerkörper, wobei die Dekorkörper chatonförmige Schmucksteine sind,
- Fig. 4a bis 4d: schematische Darstellungen zum Verfahrensschritt des Eindrückens der Dekorkörper mit einem Stempel aus elastisch verformbarem Material, wobei die Dekorkörper chatonförmige Schmucksteine sind,
- Fig. 5a und 5b: erfindungsgemäße Verbundkörper,
- Fig. 6a bis 6c: schematische Darstellungen zur Erzeugung einer Fassung für den Dekorkörper mit dem erfindungsgemäßen Verfahren,
- Fig. 7a bis 7f: Fotographien von Verbundkörpern mit in Trägerkörpern eingefassten Dekorkörpern,
- Fig. 8a bis 8f: Fotographien von verschiedenen Ausführungsformen der im Verbundkörper eingeprägten Struktur,
- Fig. 9a bis 9d: schematische Darstellungen zur flexiblen Verformbarkeit eines erfindungsgemäßen Verbundkörpers,
- Fig. 10a bis 10f: Beispiele von Gegenständen, die mit einem erfindungsgemäßen Verbundkörper verziert sind und eine Detailansicht hierzu und
- Fig. 11a und 11b: Fotographien von Gegenständen, die mit einem erfindungsgemäßen Verbundkörper überzogen sind.

Im Falle einer Mehrzahl von Dekorkörpern kann vorab eine Designvorlage hinsichtlich des Setzmusters für die Dekorkörper erstellt werden, wobei eine Setzmaschine zur Automatisierung herangezogen werden kann.

Für die Herstellung eines mit einer Struktur 5 versehenen Stempels 4 wird zunächst das positive Abbild der Struktur 5 festgelegt. Soll beispielsweise ein Stempel 4 aus Silikon hergestellt werden, mit dem die Oberfläche eines erfindungsgemäßen Verbundkörpers 1 dem Aussehen einer Kunstlederoberfläche nachempfunden werden soll, wird das Kunstleder in einem Rahmen aufgespannt und so fixiert, dass in den Rahmen eingefülltes Silikon nicht ausfließen kann. Die Größe des Rahmens ist abhängig von der Größe des Stempels 4, welche wiederrum von der Größe der Dekorkörper 3 abhängt, die mit dem Stempel 4 in den Trägerkörper 2 eingedrückt werden sollen. Dieser Rahmen verhindert während des Eindrückvorgangs auch ein seitliches Verdrängen des Silikons.

Mit diesem Vorgang können verschiedenste Strukturpositive mittels des Stempels 4 in den Verbundkörper 1 abgeformt werden, wie z. B. geometrisch strukturierte oder mit einer Abbildung geprägte Oberflächen, oder auch zufällig strukturierte Oberflächen, wie eben Lederoberflächen, Sandpapier und dergleichen.

Bei einem Stempel 4 aus Silikon können Silikone in den Shore-Härten A0 bis A15 eingesetzt werden, wie z. B. Wacker®-Silikone, Elastosil® RT 623 A/B mit Silikonöl, Wacker® AK 35, Elastosil® M 4511 mit Härter T51.

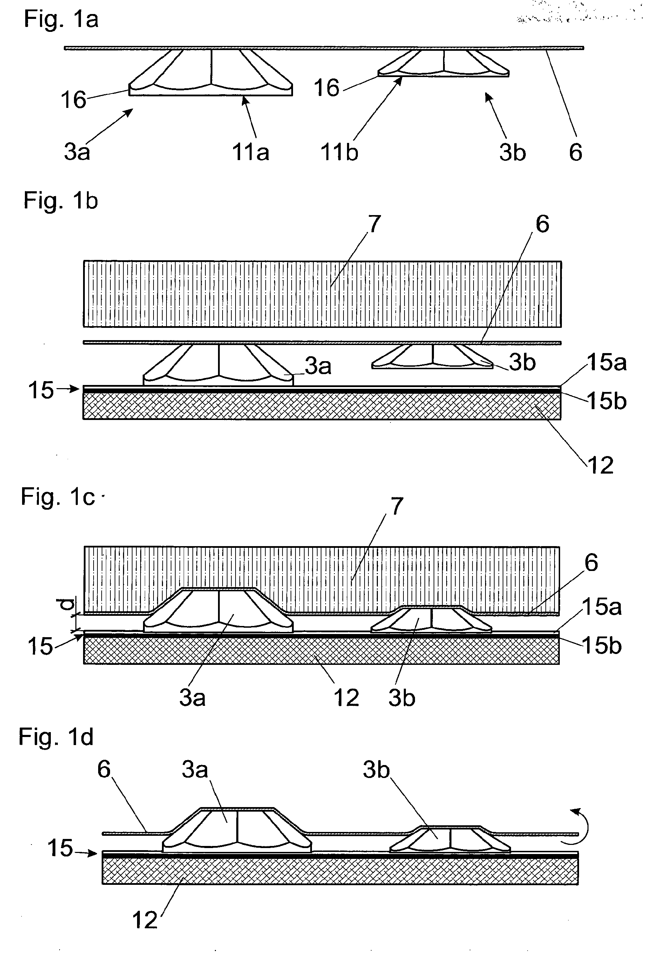

In der Figur 1a ist dargestellt, wie zwei verschieden große Schmucksteine 3a, 3b, die eine flache Rückseite 11a, 11 b aufweisen, auf einer Transferfolie 6 angeordnet werden. Die Rückseiten 11 a, 11 b dienen als Auflageflächen für den Trägerkörper 2. Als Transferfolie 6 kommt dabei z. B. eine Silikonkleb-Transferfolie der Firma Nagel & Hermann (Silicone glue, stark klebend mit Rippelfolie) in Frage. Größe, Form und Abstande der Schmucksteine 3a, 3b sind weitestgehend frei wählbar. Die Dekorkörper 3 können dabei maschinell oder manuell appliziert werden. Alternativ ist eine direkte Anordnung der Dekorkörper 3 auf dem Trägerkörper 2 ebenfalls möglich.

Wie in Figur 1b schematisch dargestellt ist, wird die Transferfolie 6 mit daran angeordneten Schmucksteinen 3a, 3b zum Trägerkörper 2 bewegt, der auf einer noch kalten Heizplatte 12 angeordnet ist. In diesem Ausführungsbeispiel besteht der Trägerkörper 2 aus einer zweilagigen thermoplastischen Folie 15, gegebenenfalls ergänzt um eine Trägerfolie. Die Schmucksteine 3a, 3b werden mit ihrer flachen Rückseite 11a, 11 b auf die thermoplastische Folie 15 gesetzt. Oberhalb der Transferfolie 6 wird ein Stempel 7 aus elastisch verformbarem Material auf die Schmucksteine 3a, 3b gesetzt. In diesem Ausführungsbeispiel ist der Stempel 7 ebenfalls aus Silikon hergestellt. Der Stempel 7 weist keine Struktur zum Einprägen in den Trägerkörper 2 auf. Der Stempel 7 für die Vorfixierung kann dabei eine Shore-Härte zwischen A0 und A30 aufweisen.

In diesem Ausführungsbeispiel ist der Trägerkörper 2 als zweilagige Folie 15 mit einer Polyurethan Schmelzfolie 15a und mit einer Trägerfolie 15b ausgebildet. Mögliche Beispiele derartiger als Folien 15 ausgebildete Trägerkörper 2 sind die transparente, dreilagige Folie Nr. 963344 und die schwarze zweilagige Folie Nr. 963347 der Firma Collano Adhesive. Alternativ können für die thermoplastische Folie 15 bzw. den thermoplastischen Trägerkörper 2 Polyamide (PA), Polyethylen (PE), amorphe Polyalphaolefin (APAO), Polyester-Elastomere (TPE-E), Polyurethan-Elastomere (TPE-U) oder Copolyamid-Elastomere (TPE-U) verwendet werden.

Wie bereits erwähnt, sind Dekorkörper unterschiedlicher Größe, Form und Farbe für das erfindungsgemäße Verfahren verwendbar. Insbesondere können Schmucksteine 3a, 3b mit flacher Rückseite, aber auch chatonförmige Schmucksteine 20a, 20b verwendet werden. Werden Dekorkörper 3 aus verschiedenen Materialien verwendet, wird vorausgesetzt, dass diese Dekorkörper 3 temperaturbeständig über den Schmelzpunkt des thermoplastischen Materials sind.

In Figur 1c ist dargestellt, wie die Schmucksteine 3a, 3b auf der thermoplastischen Folie 15 vorfixiert werden, um anschließend die Transferfolie 6 von den Schmucksteinen 3a, 3b entfernen zu können. Zunächst wird der Stempel 7 mit leichtem Druck beaufschlagt. Der Druck muss so stark sein, dass die Schmucksteine 3a, 3b leicht in die thermoplastische Folie 15 gedrückt werden. Für die Druckbeaufschlagung kann eine Durchlaufpresse oder eine Plattenpresse verwendet werden. Möglich ist z. B. eine Flachbett-Labor- Vulkanisierungspresse KWS VP 320 der Firma KWS Kächele GmbH. Bei großindustrieller Fertigung können z. B. Flachbett-Kaschieranlagen der Firma Maschinenfabrik Herbert Meyer GmbH verwendet werden.

In weiterer Folge wird in diesem Ausführungsbeispiel die Heizplatte 12 auf eine Temperatur zwischen 120°C und 160° C erhitzt, wobei der Druck auf den Stempel 7 aufrecht erhalten wird. In dem gezeigten Ausführungsbeispiel beträgt der Abstand d zwischen dem Stempel 7 und der thermoplastischen Folie 15 zwischen 0,2 und 0,5 mm.

Nach Erreichen des Schmelzpunktes der thermoplastischen Folie 15 wird die Erwärmung der Heizplatte 12 gestoppt, sodass die Folie 15 abkühlen kann. Dabei wird der Druck auf den Stempel 7 konstant gehalten. Bei einer Temperatur von ca. 80°C wird der Silikonstempel 7 entfernt und die Transferfolie 6 abgezogen. Dies ist in Figur 1d schematisch anhand des gekrümmten Pfeils gezeigt.

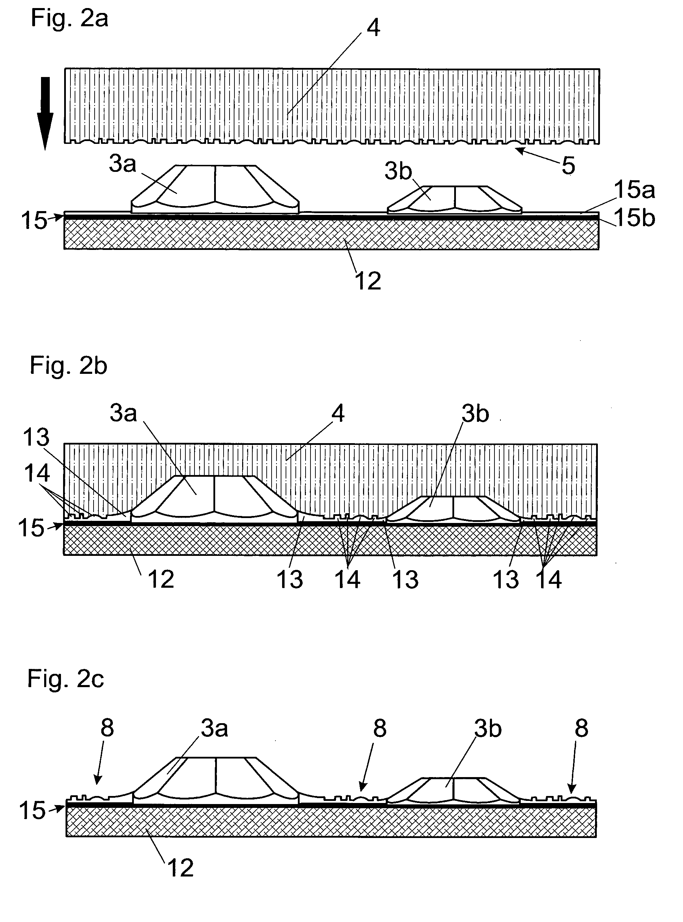

Für das Eindrücken der Schmucksteine 3a, 3b in den Trägerkörper 2 zu deren endgültiger Befestigung wird der Trägerkörper 2 mit vorfixierten Schmucksteinen 3a, 3b auf der kalten Heizplatte 12 in der Presse positioniert wird. Der Stempel 4, der in diesem Ausführungsbeispiel ebenfalls aus Silikon besteht, wird beim Schließen der Presse planparallel auf den Trägerkörper 2 gepresst (vergleiche Fig. 2a). Der Stempel 4 weist eine Struktur 5 auf, deren negatives Abbild im Trägerkörper 2 durch den Pressvorgang eingeprägt wird. Der Stempel 4 kann - ebenso wie der Stempel 7 - eine Dicke zwischen 3 und 10 mm aufweisen. Soll in den Verbundkörper 1 keine Struktur eingeprägt werden, kann der Stempel 7, der zum Vorfixieren der Schmucksteine 3a, 3b verwendet wird, auch für das Eindrücken der Schmucksteine 3a, 3b in diesem Verfahrensschritt herangezogen werden.

Anschließend wird der Stempel 4 mit Druck beaufschlagt. Dies ist in Figur 2b dargestellt. Dabei ist der Druck abhängig von der Größe der Dekorkörper 3 und der Shore-Härte des Stempels 4. In diesem Ausführungsbeispiel beträgt der Druck p = 25 kN. Das seitliche Verdrängen des Silikons kann durch Verwendung eines Rahmens, der zur besseren Übersichtlichkeit in den Figuren 2a und 2b nicht dargestellt ist, verhindert werden. In Folge der Druckbeaufschlagung schmiegt sich der elastisch verformbare Stempel 4 um die Schmucksteine 3a und 3b. Allerdings weist der Stempel 4 nur ein begrenztes Abformvermögen auf, sodass sich am Rand der Schmucksteine 3a, 3b Hohlräume 13 bilden. Weitere Hohlräume 14 bilden sich bei der reliefartigen Struktur 5 des Stempels.

In diese Hohlräume 14 wird das pastöse bzw. schmelzflüssige thermoplastische Material des Trägerkörpers 2 gepresst, wodurch sich in weiterer Folge die reliefartige Struktur 8 des Trägerkörpers 2 und die Fassungen 9 für die Dekorkörper 3 ausbilden. Dabei wird die Heizplatte 12 auf eine Temperatur zwischen 120°C und 160°C erhitzt, bis die Schmelztemperatur der thermoplastischen Folie 15 erreicht wird und für eine Haltezeit, die in diesem Ausführungsbeispiel zwischen einer und drei Minuten beträgt, auf dieser Temperatur gehalten wird. Dabei wird der Stempel 4 stets mit Druck beaufschlagt. Die Haltezeit ist dabei abhängig von der Größe der Dekorkörper 3. Während dieses Verfahrensschrittes füllt plastiziertes thermoplastisches Material des Trägerkörpers 2 die Hohlräume 13 am Umfangsrand 16 der Schmucksteine 3a, 3b sowie die Hohlräume 14, die aufgrund der Struktur 5 entstanden sind. Unter Druckbeaufschlagung wird die Heizplatte 12 abgeschaltet und es erfolgt eine Abkühlung auf eine Temperatur von ca. 80°C. Danach wird der Stempel 7 entfernt und der fertige Verbundkörper 1 mit fixierten Schmucksteinen 3a, 3b und dekorativem Relief 8 aus der Presse entnommen. Dies ist in Figur 2c dargestellt.

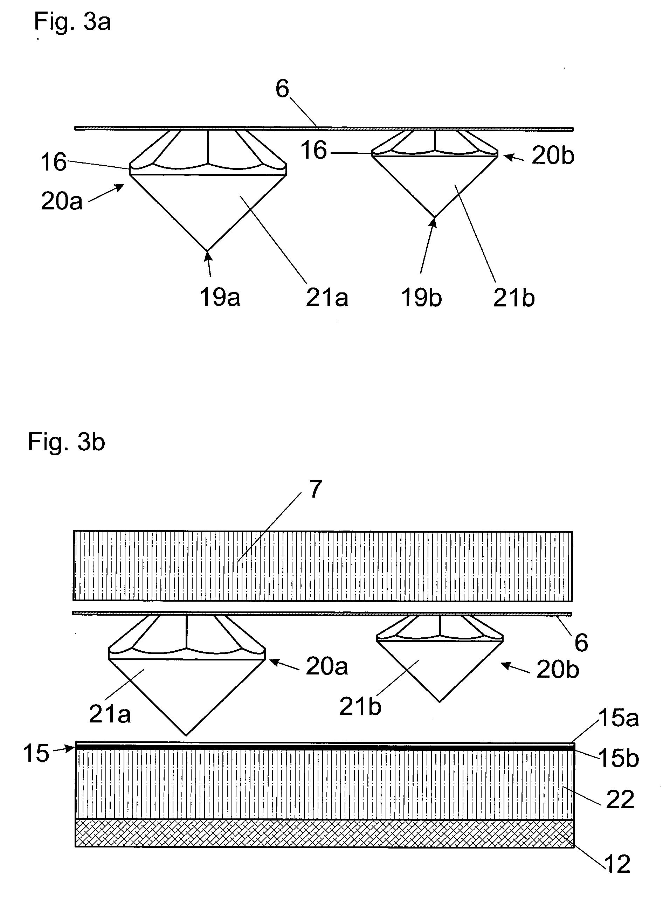

Mit dem erfindungsgemäßen Verfahren können auch Dekorkörper 3 mit einer spitz zusammenlaufenden Seite im Trägerkörper 2 angeordnet werden. Exemplarisch seien die dazu notwendigen Adaptierungen des Verfahrens am Beispiel von zwei verschieden großen chatonförmigen Schmucksteinen 20a, 20b erläutert. Chatonförmige Schmucksteine 20a, 20b bestehen aus einer Vorderseite mit einer ebenen Tafel und einer eine Spitze 19a, 19b aufweisenden Rückseite 21 a, 21 b. Die Spitze 19a, 19b wird in den Trägerkörper 2 eingesetzt, sodass die Vorderseite mit der Tafel zumindest teilweise aus dem Trägerkörper 2 hervorragt. Werden chatonförmige Schmucksteine 20a, 20b mit einer Transferfolie 6 auf bzw. im Trägerkörper 2 angeordnet, werden die Schmucksteine 20a, 20b mit der ebenen Tafel auf der Transferfolie 6 angeordnet. Dabei ist eine genaue Ausrichtung notwendig, sodass die Längsrichtung des chatonförmigen Schmucksteins 20a, 20b senkrecht auf die Transferfolie 6 ausgerichtet ist. In Figur 3a ist dargestellt wie zwei verschiedengroße chatonförmige Schmucksteine 20a, 20b auf einer Transferfolie 6 angeordnet werden. Im Unterschied zum Ausführungsbeispiel gemäß der Figuren 1 und 2 wird bei der Anwendung für chatonförmige Schmucksteine 20a, 20b die thermoplastische Folie 15 nicht direkt auf die Heizplatte 12, sondern auf eine Schutzplatte 22, z. B. eine Silikonplatte gelegt, die die gleiche Shore-Härte wie der Stempel 7 aufweisen kann. Der Druck auf den Stempel 7 muss so stark sein, dass die Spitze der chatonförmigen Schmucksteine 20a, 20b leicht in die Schmelzfolie 15 gedrückt wird. Für dieses Ausführungsbeispiel darf der Stempel 7 zur Vorfixierung der Schmucksteine 20a, 20b keine oder nur eine sehr geringe reliefartige Struktur aufweisen, damit die Lage und Ausrichtung der chatonförmigen Schmucksteine 20a, 20b möglichst wenig beeinflusst wird. Die diesen Vorgang darstellende Figur 3b entspricht im Wesentlichen der Figur 1b, wobei aufgrund der eine Spitze 19a, 19b aufweisenden chatonförmigen Schmucksteine 20a, 20b unterhalb der mehrlagigen thermoplastischen Folie 15a, 15b eine wie oben beschriebene Schutzplatte 22 angeordnet ist, die ihrerseits auf der Heizplatte 12 angeordnet wird.

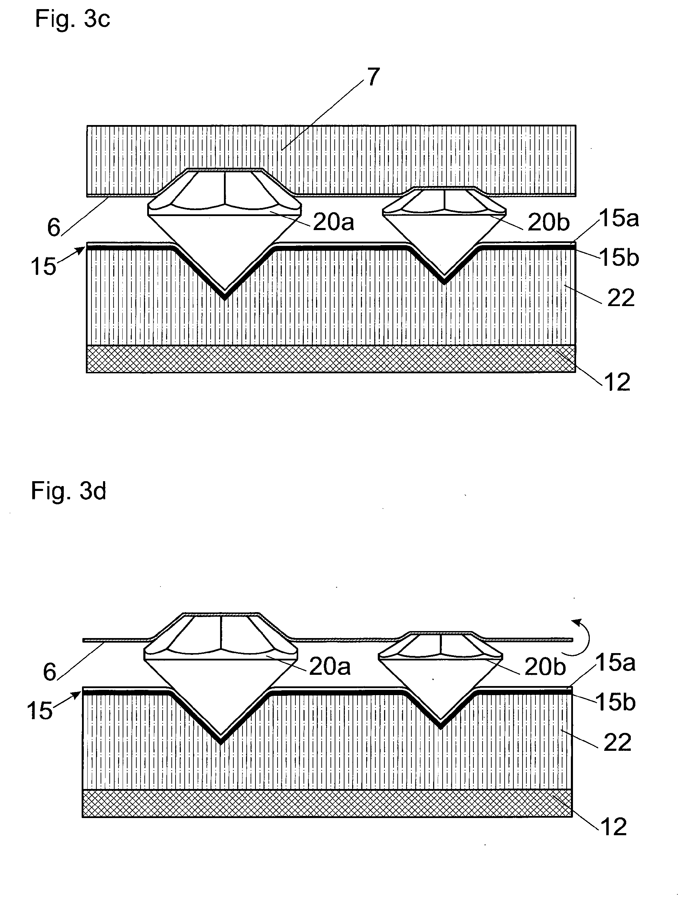

Die in den Figuren 3c und 3d schematisch dargestellten Verfahrensschritte entsprechen den im Zusammenhang mit den Figuren 1c und 1d beschriebenen Verfahrensschritten, sodass auf die diesbezüglichen Ausführungen verwiesen werden kann.

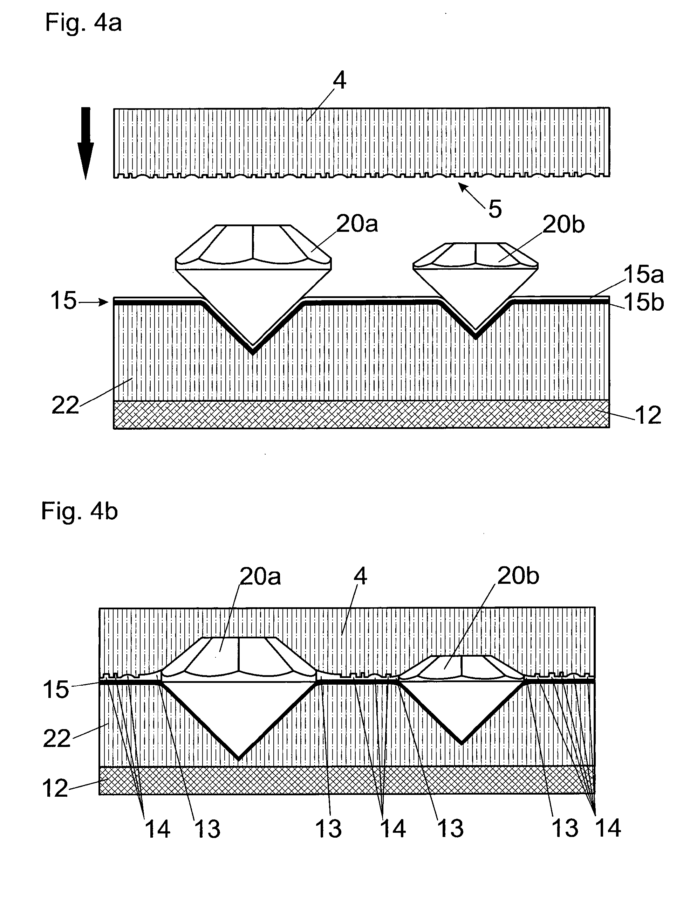

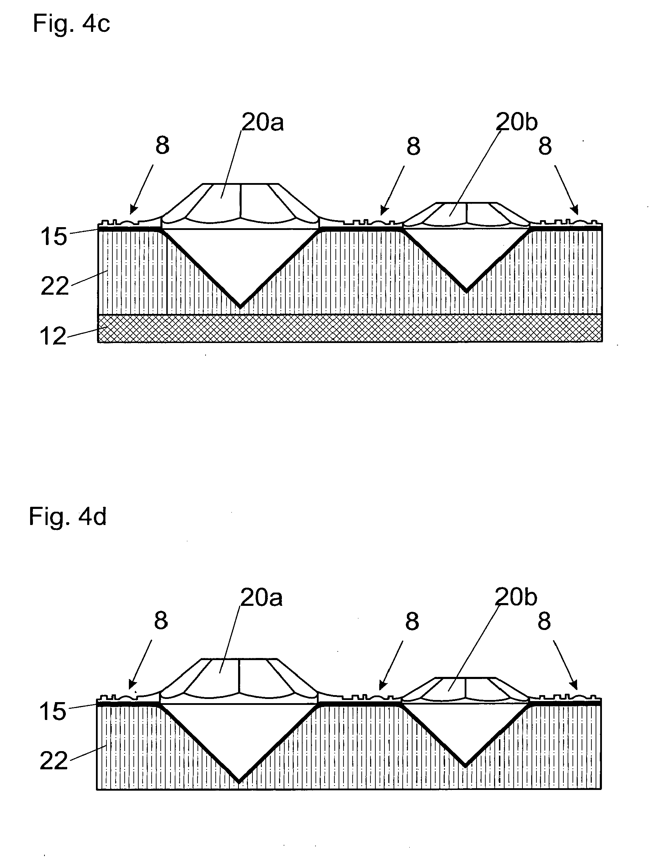

Auch während des Eindrückvorgangs, wie er in den Figuren 4a bis 4d dargestellt ist, muss im Falle eines Trägerkörpers 2 bestehend aus einer thermoplastischen Folie 15 bei der Anwendung des Verfahrens für chatonförmige Schmucksteine 20a, 20b die Folie 15 auf einer Schutzplatte 22, z. B. aus Silikon, platziert werden. Die Schutzplatte 22 kann dabei annähernd die gleiche Shore-Härte wie der Stempel 4 aufweisen. Der dabei entstehende Verbundkörper 1 kann je nach Dicke des Trägerkörpers 2 eine reliefartige Unterseite infolge des Eindrückens der Spitze 19a, 19b aufweisen. Diese reliefartige Unterseite kann planiert werden, z. B. indem geeignetes Material von unten her aufgetragen wird, bis eine ebene Fläche entstanden ist.

Dabei entsprechen die in den Figuren 4a bis 4c schematisch dargestellten Verfahrensschritte im Wesentlichen jenen der Figuren 2a bis 2c, wobei aber aufgrund der Spitze 19a, 19b der chatonförmigen Schmucksteine 20a, 20b die Schmucksteine 20a 20b samt der thermoplastischen Folie 15 in die Schutzplatte 22 hineingedrückt werden. Dabei kann vorgesehen sein, dass die Schutzplatte 22 ein Bestandteil des Trägerkörpers 2 ist, in dem beispielsweise die Folie 15 mit der Schutzplatte 22 verklebt ist, wie dies in Figur 4d dargestellt ist. Es kann aber auch vorgesehen sein, die Schutzplatte 22 nach dem Eindrücken der Dekorkörper 3 wieder vom Trägerkörper 2 zu entfernen.

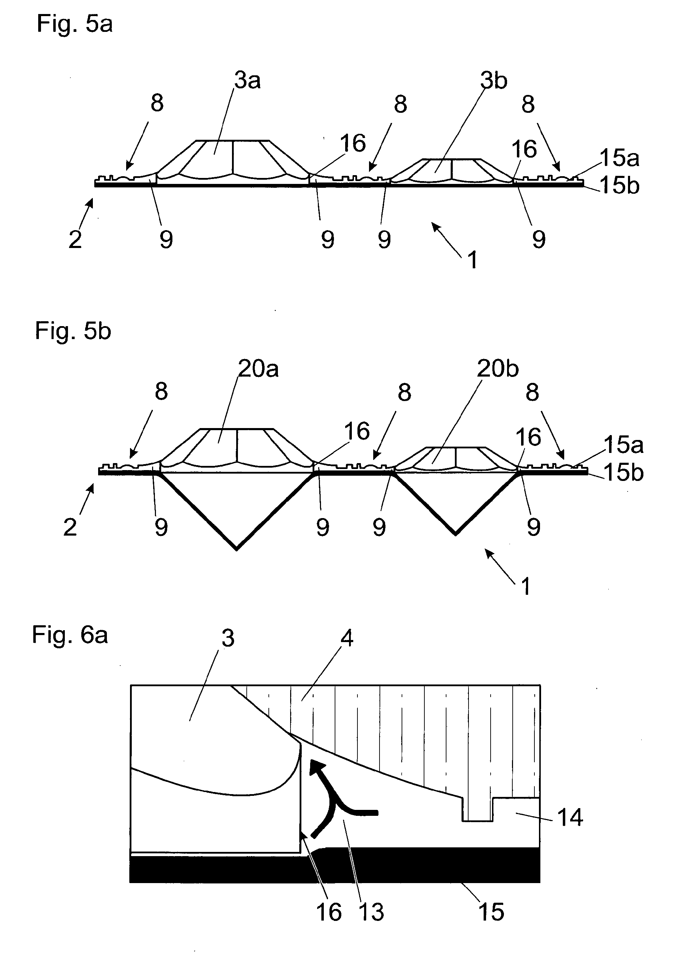

In Figur 5a ist ein erfindungsgemäßer Verbundkörper 1 dargestellt, bei dem zwei verschieden große Schmucksteine 3a und 3b am Trägerkörper 2 befestigt sind, wobei der Trägerkörper 2 in diesem Fall aus einer thermoplastischen Folie 15 mit Lagen 15a und 15b besteht. Der Verbundkörper 1 weist eine reliefartige Struktur 8 in den Bereichen außerhalb der Schmucksteine 3a, 3b auf. Dabei ist der Umfangsrand 16 der Schmucksteine 3a, 3b durch die während des Eindrückvorgangs entstandene Fassung 9 eingefasst. Dadurch werden die Schmucksteine 3a, 3b formschlüssig am Trägerkörper 2 gehalten. Diese Fassung 9 verstärkt die adhäsive Haftung ganz wesentlich. Je nach Ausbildung des Randbereichs der Dekorkörper 3 kann die Fassung 9 den Umfangsrand 16 ringförmig umklammern, wodurch sich eine ganz besonders stabile Befestigung ergibt.

In Figur 5b ist ein Verbundkörper 1 dargestellt, bei dem im Unterschied zur Figur 5a die Schmucksteine 20a, 20b chatonförmig ausgebildet sind.

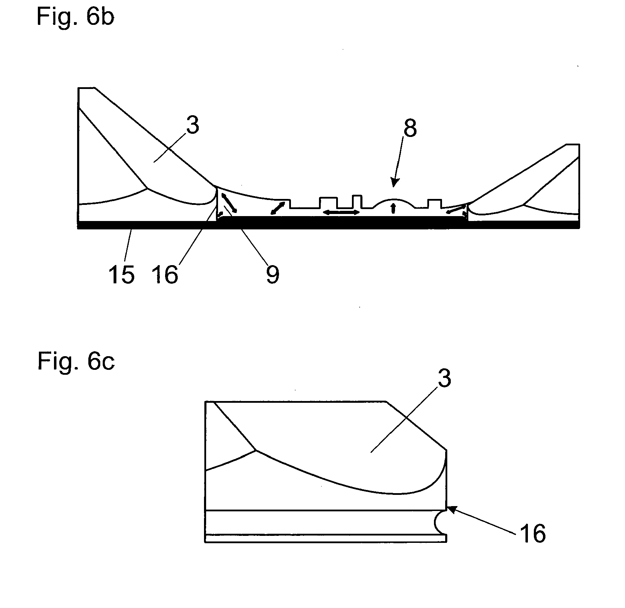

Die Figuren 6a bis 6c zeigen schematisch, wie die Fassung 9 und die Struktur 8 während des Eindrückvorgangs entsteht. Zunächst wird der Dekorkörper 3 auf dem Trägerkörper 2 angeordnet. Anschließend wird der Stempel 4 auf dem Dekorkörper 3 platziert und mit Druck beaufschlagt. Der Stempel 4 schmiegt sich dabei zwar aufgrund seiner elastischen Verformbarkeit an den Dekorkörper 3 an. Aufgrund des begrenzten Abformvermögens des Stempels 4 ergibt sich ein Hohlraum 13, um den Umfangsrand 16 am Fuß des Dekorkörpers 3. Das thermoplastische Material des Trägerkörpers 2 beginnt bei Erreichen der Schmelztemperatur schmelzflüssig bzw. pastös zu werden, wodurch thermoplastisches Material vom Trägerkörper 2 aufsteigt und den Hohlraum 13 füllt, wie dies mit den Pfeilen in der Figur 6a dargestellt ist. Nach dem Abkühlen ist eine formschlüssige Verbindung entstanden. In ähnlicher Weise fließt das thermoplastische Material in die Hohlräume 14, die sich bei den strukturierten Bereichen 5 des Stempels 4 ergeben. Dies ist in der schematischen Darstellung der Figur 6b anhand der Pfeile gezeigt.

Durch eine geeignete Geometrie des Umfangsrandes 16 des Dekorkörpers 3 kann die mechanische Verbindung zwischen dem Dekorkörper 3 und dem Trägerkörper 2 optimiert werden. Figur 6c zeigt ein Beispiel für eine formschlussoptimierte Ausgestaltung des Umfangrandes 16 des Dekorkörpers 3.

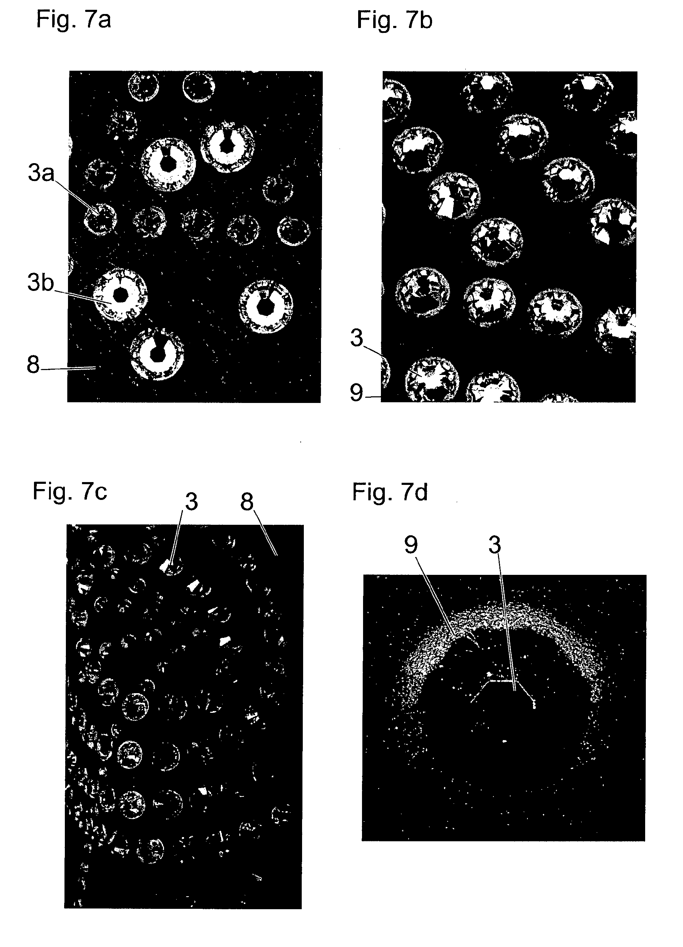

Die Figuren 7a bis 7f zeigen Fotographien von Ausschnitten von Ausführungsbeispielen der erfindungsgemäßen Verbundkörper 1. In Figur 7a ist ein Ausschnitt eines Verbundkörpers 1 gezeigt, bei dem eine Mehrzahl verschieden großer Schmucksteine 3a, 3b in zufälliger Anordnung in einem Trägerkörper 2 eingefasst sind. Die Struktur 8 zwischen den eingefassten Schmucksteinen 3a, 3b ist gut erkennbar und imitiert in diesem Beispiel die Oberfläche von Straußenleder nach.

In Figur 7b ist ein weiteres Ausführungsbeispiel eines erfindungsgemäßen Verbundkörpers 1 in einer Fotographie dargestellt, wobei die Fassung 9 den Umfangsrand 16 der als Schmucksteine ausgebildeten Dekorkörper 3 umringt und dadurch einen besonders stabilen mechanischen Halt bietet.

In Figur 7c wiederum ist ein Ausschnitt eines Verbundkörpers 1 dargestellt, bei dem die eingeprägte Struktur 8 ein geometrisches Muster darstellt. In der Detailansicht der Figur 7d ist die Fassung 9 besonders gut erkennbar. Diese umschließt den Umfangsrand 16 des in Form eines Schmucksteins ausgebildeten Dekorkörpers 3. In diesem Fall umfasst der Trägerkörper 2 eine mehrlagige thermoplastische Folie 15, wobei die äußerste Folie 15a für Licht des sichtbaren Spektrums im Wesentlichen transparent ausgebildet ist; sodass die Fassung 9 den Brillanzeffekt durch den Schmuckstein möglichst wenig beeinträchtigt.

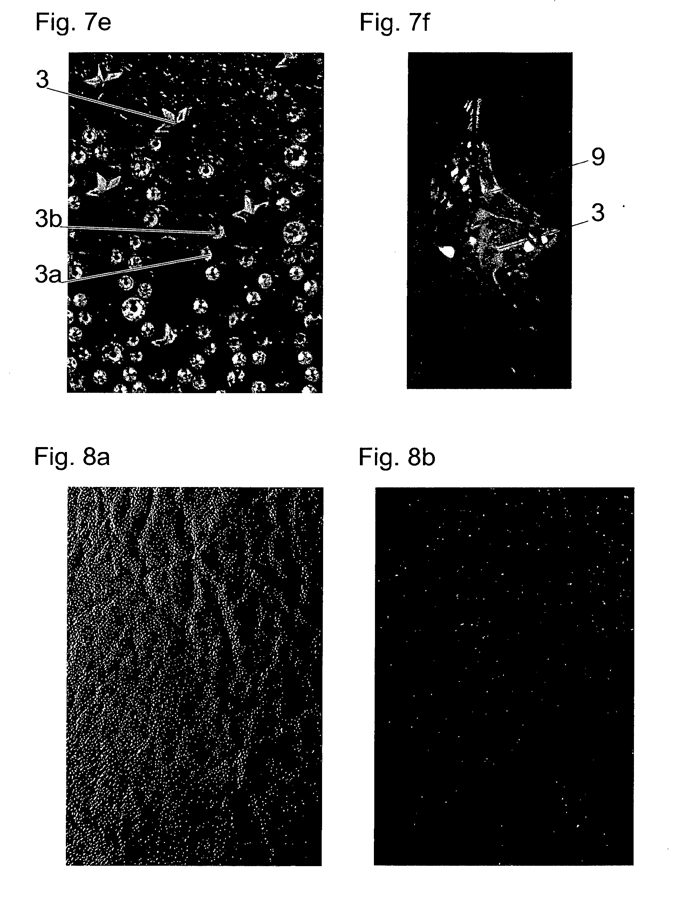

In Figur 7e ist eine weitere Fotographie betreffend einen Ausschnitt aus einem erfindungsgemäßen Verbundkörper 1 dargestellt, bei dem neben verschieden großen Schmucksteinen 3a, 3b auch sternförmige Dekorkörper 3 in einem Trägerkörper 2 angeordnet sind, wobei in den Trägerkörper 2 eine Struktur 8 eingeprägt ist, die eine Lederoberfläche imitiert. In der Detailansicht gemäß Figur 7f ist gezeigt, wie die Fassung 9 um den Rand des sternförmigen Dekorkörpers angeordnet ist und einen besonders stabilen Halt gewährt.

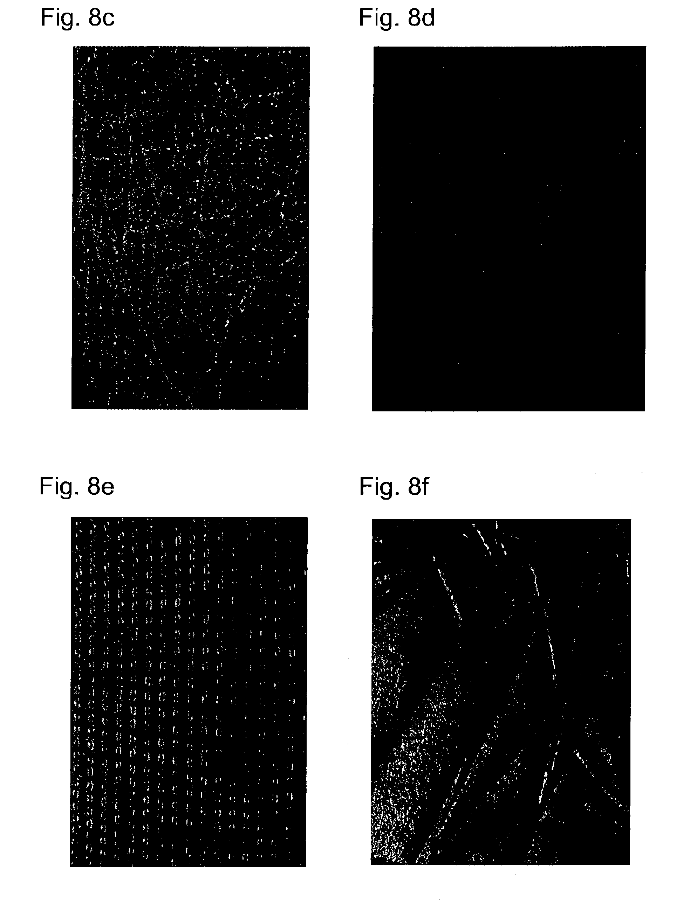

Die Figuren 8a bis 8f zeigen Fotographien von verschiedenen Ausführungsformen der in den Verbundkörper 1 eingeprägten Struktur 8, wobei die Struktur 8 gemäß Figuren 8a und 8b die Oberflächen zweier verschiedener textiler Flächengebilde imitiert, während die Struktur gemäß Figur 8c die Oberfläche von Straußenleder imitiert und die Struktur 8 gemäß Figur 8d die Oberfläche von Kalbsleder imitiert. In den Figuren 8e und 8f ist in die Oberfläche des Verbundkörpers 1 ein geometrisches Muster als Struktur 8 eingeprägt. Es bestehen vielfältigste Gestaltungsmöglichkeiten.

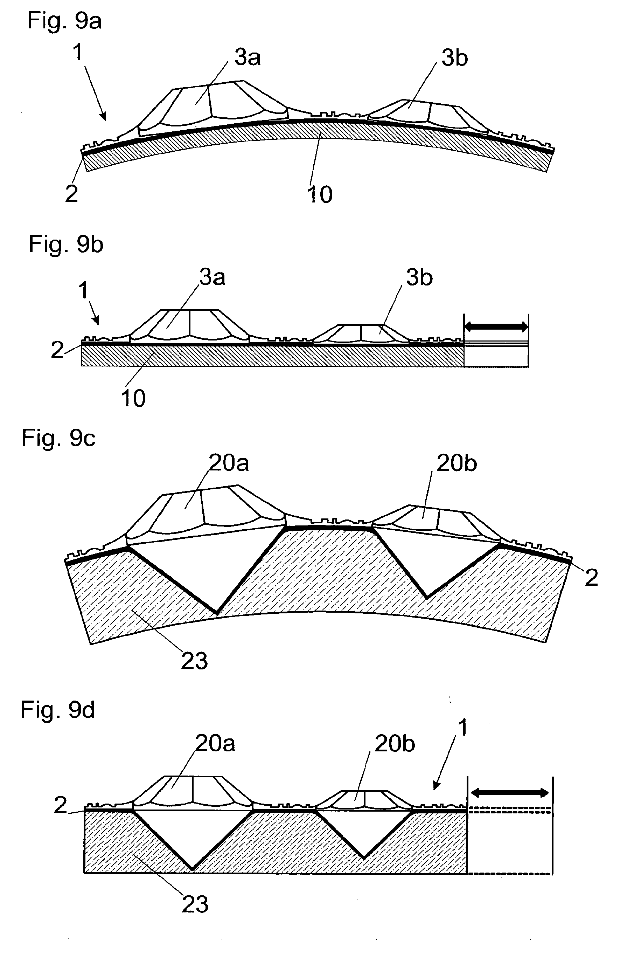

Die Figuren 9a bis 9d zeigen die Vorteile eines Verbundkörpers 1, bei dem der Trägerkörper 2 aus einer thermoplastischen Folie 15 besteht. In der Figur 9a soll der Verbundkörper 1 auf einem gewölbten oder flexiblen Gegenstand 10, beispielsweise einer Computermaus oder einer Handtasche, aufgeklebt werden. Aufgrund der Flexibilität der thermoplastischen Folie 15 und des sicheren Halts der Dekorkörper 3a, 3b können unterschiedlichst geformte und auch selbst flexible Gegenstände 10 mit dem Verbundkörper 1 verziert werden.

In ähnlicher Weise zeigt Figur 9b, dass ein elastischer Gegenstand 10, der mit einem Verbundkörper 1 bestehend aus einer thermoplastischen Folie 15 mit darin befestigten Dekorkörpern 3a, 3b versehen ist, bei Raumtemperatur um ca. 30 - 40 % gedehnt werden kann, ohne dass die Dekorkörper 3a, 3b verloren gehen.

Die Figuren 9c und 9d sind ähnlich zu den Figuren 9a und 9b mit dem Unterschied, dass die Dekorkörper 3 als chatonförmige Schmucksteine 20a, 20b ausgebildet sind und mit ihrer Spitze 19a, 19b und der Trägerfolie 15 in eine Schutzschicht 23 aus flexiblem Material eingebettet sind, wodurch das Herausdrücken der Schmucksteine 20a, 20b verhindert wird. Als Schutzschicht 23 kann beispielsweise die Schutzplatte 22 vorgesehen sein.

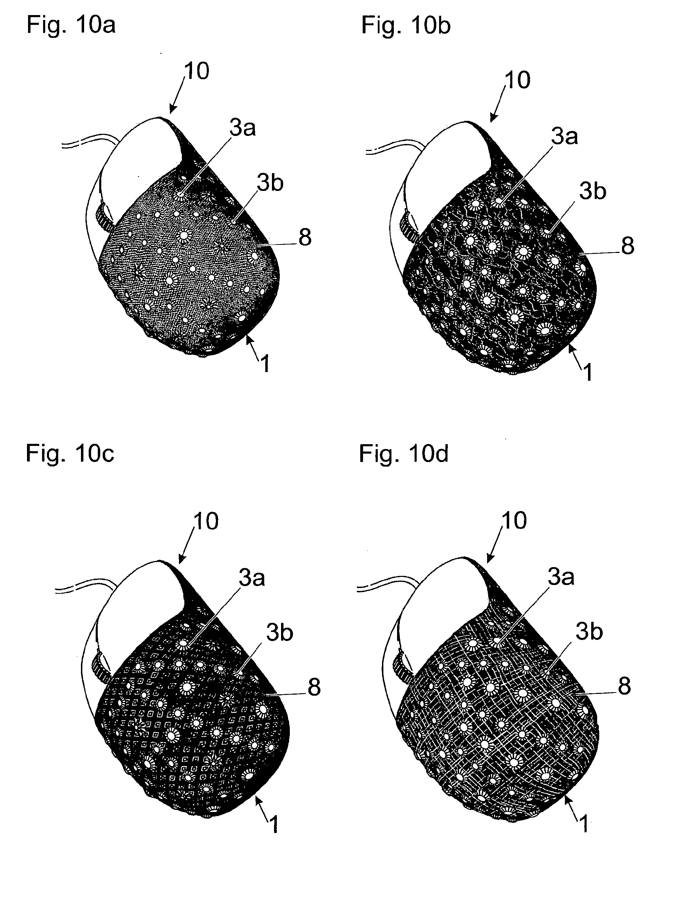

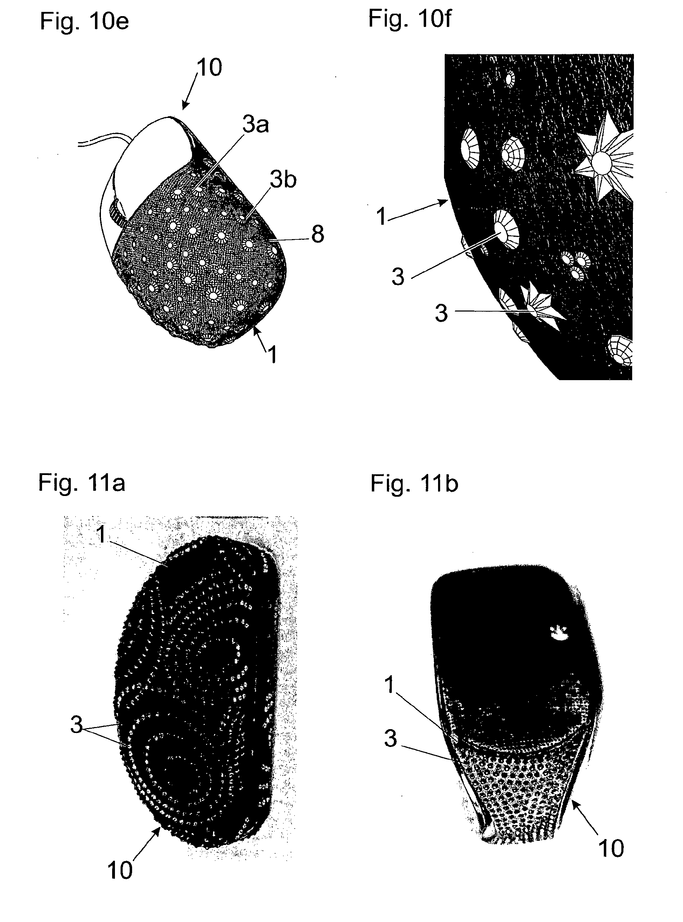

In den Figuren 10a bis 10e sind Computermäuse 10 dargestellt, deren hinterer Bereich jeweils mit einem erfindungsgemäßen Verbundkörper 1 überzogen worden ist, wobei aufgrund der elastischen Eigenschaften des Trägerkörpers 2 eine Anpassung an die Oberfläche der Computermäuse 10 problemlos möglich ist. Dabei besteht aufgrund des äußerst stabilen Halts der Dekorkörper 3 in Trägerkörper 2 keine Gefahr, die Dekorkörper 3 zu verlieren. Im Falle der in den Figuren 10a bis 10e dargestellten Computermäuse 10 sind jeweils eine Vielzahl von Dekorkörpern 3 in Form verschieden großer Schmucksteine 3a, 3b angeordnet. Dabei unterscheiden sich die Ausführungsformen durch die in den Verbundkörper 1 eingeprägte reliefartige Struktur 8 voneinander. Während in den Figuren 10c und 10d geometrische Muster eingeprägt sind, wird in den Figuren 10a, 10b und 10e die Oberfläche eines Leders oder eines textilen Flächengebildes imitiert.

In einer weiteren Ausführungsform zeigt die Detailansicht der Figur 10f einen Verbundkörper 1, der an einem Gegenstand 10 angeordnet ist, wobei im Verbundkörper verschiedenste Dekorkörper 3 in Form von Schmucksteinen aber auch sternförmig ausgebildeten Körpern 3 angeordnet sind.

In Figur 11a ist eine Fotografie eines Brillenetuis 10 dargestellt, dessen Gehäuse mit einem Verbundkörper 1 überzogen ist, welcher aus einem flexiblen Trägerkörper 2 mit einer Vielzahl darin angeordneter Schmucksteine 3 besteht.

In Figur 11b ist eine Fotographie eines Lautsprechers 10 dargestellt, dessen Gehäuse auf einer Seite mit einem Verbundkörper 1 überzogen ist, in dem eine Vielzahl von Schmucksteinen 3 in einer regelmäßigen Anordnung eingefasst sind.

## Patentansprüche

1. Verfahren zur Herstellung eines Verbundkörpers (1) umfassend einen Trägerkörper (2) und wenigstens einen Dekorkörper (3), vorzugsweise einen Schmuckstein (3a, 3b), wobei der Trägerkörper (2) thermoplastisches Material umfasst, **gekennzeichnet durch** die Schritte:
• Anordnen des Dekorkörpers (3) auf dem Trägerkörper (2)
• Erwärmen des Trägerkörpers (2)
• Eindrücken des Dekorkörpers (3) in den Trägerkörper (2) mit einem Stempel (4) aus elastisch verformbarem Material.

2. Verfahren nach Anspruch 1, wobei der Trägerkörper (2) eine einlagige oder mehrlagige thermoplastische Folie (15) umfasst oder aus einer einlagigen oder mehrlagigen thermoplastischen Folie (15) besteht.

3. Verfahren nach Anspruch 2, wobei Trägerkörper (2) eine für Licht des sichtbaren Spektrums im Wesentlichen transparente Folie (15) umfasst.

4. Verfahren nach einem der Ansprüche 1 bis 3, wobei das Material des Stempels (4) ausgewählt ist aus der Gruppe der Elastomere.

5. Verfahren nach einem der Ansprüche 1 bis 4, wobei die Oberfläche des Stempels (4) mit einer Struktur (5) versehen ist, die durch das Eindrücken in das thermoplastische Material des Trägerkörpers (2) eingeprägt wird.

6. Verfahren nach einem der Ansprüche 1 bis 5, wobei der Dekorkörper (3) mit einer Transferfolie (6) auf dem Trägerkörper (2) angeordnet wird.

7. Verfahren nach einem der Ansprüche 1 bis 6, wobei der Dekorkörper (3) auf dem Trägerkörper (2) durch Andrücken mit einem Stempel (7) aus elastisch verformbarem Material am Trägerkörper (2) vorfixiert wird.

8. Verfahren nach Anspruch 7, wobei der Stempel (7) zur Vorfixierung auch zum Eindrücken des Dekorkörpers (3) verwendet wird.

9. Verfahren nach einem der Ansprüche 1 bis 8, wobei jener Bereich des Trägerkörpers (2), in dem der Dekorkörper (3) angeordnet wird, einen niedrigeren Schmelzpunkt aufweist als davon entfernte Bereiche des Trägerkörpers (2).

10. Verfahren zur Dekorierung eines Gegenstandes (10) mit einem Verbundkörper (1), hergestellt nach einem Verfahren gemäß einem der Ansprüche 1 bis 9, **dadurch gekennzeichnet, dass** der Trägerkörper (2) mit der vom Dekorkörper (3) entfernten Seite am Gegenstand (10) befestigt wird.

11. Verbundkörper (1) umfassend einen Trägerkörper (2) und wenigstens einen Dekorkörper (3), vorzugsweise einen Schmuckstein (3a, 3b), wobei der Trägerkörper (2) thermoplastisches Material umfasst und wobei der Verbundkörper (1) insbesondere nach einem Verfahren gemäß einem der Ansprüche 1 bis 9 hergestellt ist, **dadurch gekennzeichnet, dass** auf jener Seite des Trägerkörpers (2), auf der der Dekorkörper (3) angeordnet ist, zumindest bereichsweise ein dekoratives Relief (8) eingeprägt ist.

12. Verbundkörper nach Anspruch 11, wobei der Trägerkörper (2) elastisch verformbar ist.

13. Verbundkörper nach Anspruch 11 oder 12, wobei der Umfangsrand des Dekorkörpers (3) vom thermoplastischen Material des Trägerkörpers (2) zumindest bereichsweise, vorzugsweise ringförmig, eingefasst ist.

14. Verbundkörper nach einem der Ansprüche 11 bis 13, wobei der Dekorkörper (3) ein chatonförmiger Schmuckstein (20a, 20b) ist, der mit der zu einer Spitze (19a, 19b) zusammenlaufenden Rückseite (21a, 21b) im Trägerkörper (2) angeordnet ist.

15. Stempel (4) aus elastisch verformbarem Material zum Eindrücken eines Dekorkörpers (3) in einen Trägerkörper (1) gemäß einem Verfahren nach einem der Ansprüche 5 bis 9, **dadurch gekennzeichnet, dass** die Oberfläche des Stempels (4) zumindest bereichsweise mit einer Struktur (5) versehen ist.
